(19) **Europäisches Patentamt / European Patent Office / Office européen des brevets**

(11) **EP 1 864 344 B1**

(12) # EUROPEAN PATENT SPECIFICATION

(45) Date of publication and mention
of the grant of the patent:
**02.05.2018 Bulletin 2018/18**

(51) Int Cl.:
***H01M 4/58*** *(2010.01)*

(21) Application number: **06732778.3**

(22) Date of filing: **31.03.2006**

(86) International application number:
**PCT/KR2006/001210**

(87) International publication number:
**WO 2006/109947 (19.10.2006 Gazette 2006/42)**

(54) **LITHIUM SECONDARY BATTERY COMPRISING ELECTRODE ADDITIVE**

LITHIUM-SEKUNDÄRBATTERIE MIT EINEM ELEKTRODENZUSATZSTOFF

ACCUMULATEUR AU LITHIUM COMPRENANT UN ADDITIF D'ELECTRODE

(84) Designated Contracting States:
**DE FR GB**

(30) Priority: **01.04.2005 KR 20050027506**

(43) Date of publication of application:
**12.12.2007 Bulletin 2007/50**

(73) Proprietor: **LG CHEM, LTD.**
**Seoul 150-721 (KR)**

(72) Inventor: **GOH, Eun-Young**
**Goyang-si,**
**Gyeonggi-do 411-313 (KR)**

(74) Representative: **Cabinet Plasseraud**
**66, rue de la Chaussée d'Antin**
**75440 Paris Cedex 09 (FR)**

(56) References cited:
**JP-A- 4 022 066     JP-A- 06 111 821**
**JP-A- 2001 160 395     US-A- 5 679 481**
**US-A- 5 744 265     US-A- 5 744 265**

## Description

## Technical Field

The present invention relates to an electrode for a lithium secondary battery comprising $Li_2CuO_2$ as an electrode additive and a lithium secondary battery fabricated by using the same.

## Background Art

Currently, as mobile communication and electronic information technologies have been developed, there is a great demand for lithium secondary batteries having light weight and a high capacity. However, conventional lithium secondary batteries represent unbalance of the irreversible reaction between a cathode and an anode, so that the conventional secondary batteries cannot completely reveal the full capacity thereof. In addition, such unbalance of the irreversible reaction between the cathode and the anode leads to over-discharge of the lithium secondary battery, and causes the electric potential of the anode to rise excessively.

In order to solve the problem related to the capacity of the lithium secondary battery, a specific compound capable of providing lithium ions has been added to the cathode such that the capacity of the lithium secondary battery can be increased. Such a specific compound includes $Li_2MO_2$ (M=Ni, Cu), etc. For instance, U.S. Patent No. 5,744,265 discloses a "lithium cell", in which a cathode active material is obtained by adding $Li_2CuO_2$ having a relatively less electrochemical potential versus lithium to $LiMn_2O_4$, thereby providing a 3V-plateau to the cathode side in the capacity-potential graph. Thus, a stable discharge area can be ensured without causing a sudden voltage drop in the vicinity of 3V, thereby increasing the capacity of the lithium cell. However, the above method must excessively use $Li_2CuO_2$, thereby causing a problem in terms of cost. In addition, it is necessary to specifically use $LiMn_2O_4$ having a spinel structure as the cathode active material.

Meanwhile, over-discharge is one of the parameters exerting an influence upon the long-term performance of a lithium ion secondary battery. The over-discharge refers to a state in which a cell has been excessively discharged beyond a predetermined range. In a case of the lithium secondary battery, it is generally called a "normal operation state" if a potential difference (voltage) between the cathode and the anode is within a range of 2.75 to 4.2V. If the potential difference is less than 2.75V, it is called an "over-discharge state". When the above over-discharge state continues for a predetermined time, the battery cannot be reversibly charged/discharged, so that the life span of the battery may be significantly reduced while degrading performance of the battery.

One of the parameters causing the over-discharge state of the battery is the unbalance of an irreversible reaction between the cathode and the anode.

In the case of the lithium secondary battery, the potential difference between the cathode and the anode can be reduced through the discharge operation. As a method for reducing the potential difference between the cathode and the anode, there are two types of mechanism, in which one is to reduce the electric potential of the cathode corresponding to the electric potential of the anode, and the other is to increase the electric potential of the anode corresponding to the electric potential of the cathode. The above mechanism may vary depending on the irreversible capacity of the cathode and the anode. In an extreme case, the potential difference between the cathode and the anode becomes less than 2.75V, leading to the over-discharge state of the lithium secondary battery.

In addition, it happens that the electric potential of the anode may rise to or above 3.4V due to the over-discharge or other discharge operation of the battery. In the case of the lithium secondary battery, copper is mainly used as an anode electrode collector. Thus, copper ions can be electrochemically eluted from copper foil, which is used as the anode collector, in the vicinity of 3.4V. If the copper ions are stacked on the anode, the performance of the lithium secondary battery may be degraded.

JP 4 022066 A relates to nonaqueous secondary battery. US 5 679 481 A relates to a cathode material for a lithium secondary battery.

## Disclosure

## Technical Problem

Accordingly, it is necessary to provide a method or an apparatus capable of effectively restricting over-discharge or abnormal increase of the electric potential of the anode.

Inventors of the present invention have found that it is possible to increase the capacity of the battery and to adjust the irreversible reaction between the cathode and the anode by adding $Li_2CuO_2$ to the cathode as an electrode additive. The present invention is as defined in the attached set of claims.

Therefore, it is described an electrode for a lithium secondary battery, in which $Li_2CuO_2$ is added to a cathode, thereby increasing a capacity of the lithium secondary battery while preventing the lithium secondary battery from being over-discharged without degrading performance of the lithium secondary battery by the over-discharge. In addition, it is an object of the present invention to provide a lithium secondary battery using the electrode.

It is described a method for adjusting unbalance of the irreversible reaction between a cathode and an anode of a lithium secondary battery by adding $Li_2CuO_2$ to the cathode of the lithium secondary battery. It is also described a method for preventing an electric potential of an anode of a lithium secondary battery from rising to or above 3.4V by adding $Li_2CuO_2$ to a cathode of the lithium secondary battery.

**Technical Solution**

The present invention is as defined in the attached set of claims. It is described an electrode for a lithium secondary battery comprising $Li_2CuO_2$ as an electrode additive. Preferably, the electrode is a cathode and $Li_2CuO_2$ is a cathode additive.

It is described that an amount of the cathode additive $Li_2CuO_2$ may be 0.5 to 10 weight % based on the total weight of cathode materials including a cathode active material and other additives, the amount of the cathode additive $Li_2CuO_2$ is 0.5 to 5 weight % based on the total weight of cathode materials.

In order to prevent over-discharge of the lithium secondary battery, the irreversible capacity of the cathode in the first cycle must be larger than the irreversible capacity of the anode in the first cycle. The irreversible capacity of an electrode can be comparatively evaluated based on an initial charge/discharge efficiency of a battery, which can be calculated according to the following equation.

$$\frac{\text{discharge capacity in } 1^{st} \text{ cycle}}{\text{charge capacity in } 1^{st} \text{ cycle}} \times 100$$

That is, if the initial charge/discharge efficiency of the battery is low, the irreversible capacity of the electrode may be high.

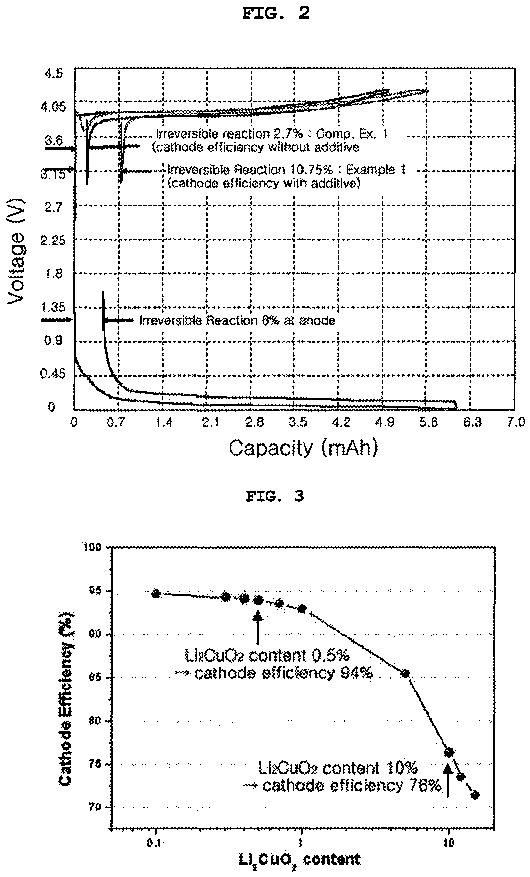

Hereinafter, the relationship between the content of the cathode additive $Li_2CuO_2$ and the efficiency of the electrode will be described with reference to FIG. 3.

If the amount of the cathode additive $Li_2CuO_2$ is less than 0.5 weight % based on the total weight of cathode materials, the cathode efficiency is equal to or more than 94%, which may be higher than the efficiency of the conventional anode materials representing superior efficiencies (94-94.5%), so the cathode additive $Li_2CuO_2$ may not serve as an additive for preventing the over-discharge.

In contrast, if the amount of the cathode additive $Li_2CuO_2$ exceeds 10 weight % based on the total weight of cathode materials, the cathode efficiency drops to or below 76%, which is lower than the efficiency of the conventional anode materials representing inferior efficiencies, such as natural graphite or Si-based anode materials, so the cathode additive $Li_2CuO_2$ may serve as an additive for preventing the over-discharge. However, the irreversible capacity of the cathode is excessively increased, so that a dead space, where lithium ions cannot be intercalated/de-intercalated, is excessively increased in the cathode, thereby lowering the capacity of the battery. For instance, if about 10 weight % of the cathode additive $Li_2CuO_2$ is added to the cathode material, a reversible capacity of the battery (a capacity reversibly usable in the battery) is about 130 mAh. Such a reversible capacity value is less than that of the battery including the cathode active material $LiMn_2O_4$ having the spinel structure, which represents a relatively low capacity, so that the capacity of a cell may be lowered.

According to the present invention, the cathode active material used together with the cathode additive $Li_2CuO_2$ has a layered structure. Preferably, the cathode active material has a plateau at an electric potential level equal to or above 3V in the voltage-capacity graph, the cathode active material includes $LiCoO_2$, $LiNiO_2$ and $Li(Ni_{1-x}Co_{1-y}Mn_{1-2})O_2$ (x+y+z= 1).

That is, the present invention can use $LiCoO_2$, $LiNiO_2$, etc., as the cathode active material having a layered structure. In particular, the present invention can use 3-component cathode active material such as $Li(Ni_{1-x}Co_{1-y}Mn_{1-z})O_2$ (x+y+z= 1), which is extensively used in these days for the purpose of obtaining a high capacity.

The function of the cathode additive $Li_2CuO_2$ according to the present invention is different from that of $Li_2CuO_2$ added to the conventional cathode active material having a spinel structure.

For instance, the lithium cell disclosed in U.S. Patent No. 5,744,265 uses the cathode active material having the spinel structure and $Li_2CuO_2$ added to the cathode active material as a cathode additive due to the special structure of the cathode active material. If $Li_2CuO_2$ is added to the cathode active material ($LiMn_2O_4$), lithium ions are generated from $Li_2CuO_2$ so that excessive lithium ions may exist during the discharge operation while representing the plateau in the vicinity of 3V. Thus, the following phase change may occur.

$LiMn_2O_4 + xLi$ (Li ion insertion) $\rightarrow Li_{(1+x)}Mn_2O_4$, wherein $0 \leq x \leq 1$.

Accordingly, an amount of reversibly usable Li can be increased due to the above electrochemical reaction, so that the capacity is also increased. However, although the capacity can be increased through the above electrochemical reaction, it may also increase the efficiency of the cathode, so that it is difficult to restrict the over-discharge. This is because it is advantageous to reduce the efficiency of the cathode in order to restrict the over-discharge.

In contrast, according to the present invention, $Li_2CuO_2$ is added to the cathode active material having the layered structure, which does not have a space into which lithium ions are inserted during the discharge operation. That is, the cathode active material having the layered structure is very stable against the electrochemical reaction, so that the phase transition to cause Li ion insertion may not occur in the cathode active material. Therefore, different from the lithium cell disclosed in U.S. Patent No. 5,744,265, which increases the capacity through the phase transition, the present invention increases the capacity by adding $Li_2CuO_2$ to the cathode in such a manner that lithium ions enough to compensate for the irreversible reaction at the anode can be provided from $Li_2CuO_2$. This may reduce the efficiency of the cathode, so that the over-discharge can be prevented.

In addition, the present invention is different from a battery disclosed in Japanese Patent Unexamined Publication No. 6-111821, which increases the capacity by dropping a voltage below 3.0V. Although the battery disclosed in Japanese Patent Unexamined Publication No. 6-111821 uses $Li_2CuO_2$ added to a cathode active material having a layered structure, it may not increase the capacity by compensating for the irreversible reaction at the anode in a voltage range of 3.0 to 4.2V, which is currently used voltage range of the battery, but increase the capacity by using the electrochemical characteristics of $Li_2CuO_2$ while dropping the voltage below 3.0V.

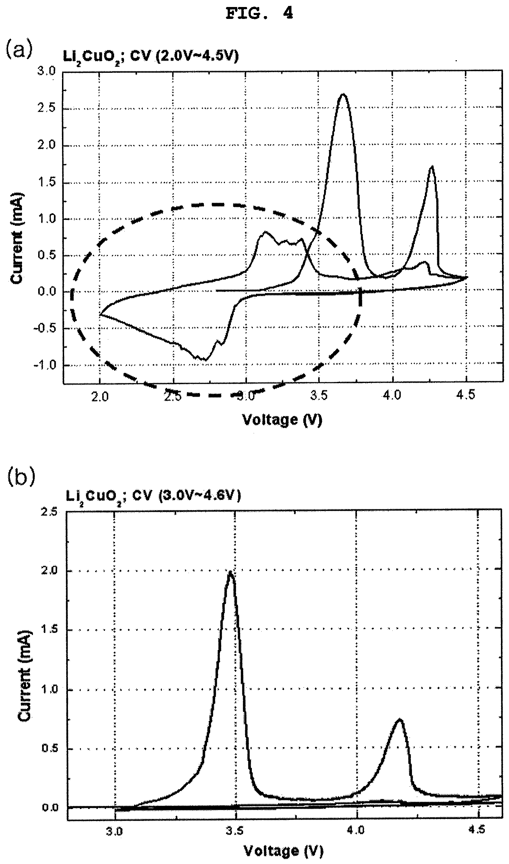

Hereinafter, the electrochemical characteristics of $Li_2CuO_2$ will be described with reference to FIGS. 4a and 4b.

In a voltage area of 3.0 to 4.6V, $Li_2CuO_2$ can provide an excessive amount of lithium ions during the first cycle. However, the structure of $Li_2CuO_2$ is changed during the charge operation, so that there is no space for receiving the lithium ions in $Li_2CuO_2$ during the discharge operation. That is, a great irreversible capacity is represented.

However, in a voltage area of 3V or less, $Li_2CuO_2$ forms a structure that the lithium ions can be inserted into $Li_2CuO_2$ and reversibly moved therein. Since the lithium ions are reversibly moved in $Li_2CuO_2$, the capacity is also increased. Such characteristics of the $Li_2CuO_2$ is different from that of the active material having the layered structure, such as $LiCoO_2$ or $LiNiO_2$, which is electrochemically stable even if the voltage drops below 3.0V, and thus cannot receive the lithium ions nor increase the capacity.

The battery disclosed in Japanese Patent Unexamined Publication No. 6-111821 employs the above characteristics of $Li_2CuO_2$. That is, since $Li_2CuO_2$ is electrochemically reversible under the voltage level below 3.0V, it is possible to increase the capacity of the lithium secondary battery by using $Li_2CuO_2$ as one of the cathode active materials, and broadening the voltage range below 3.0V. However, the present invention is different from the above Japanese Patent in that the capacity can be increased in a voltage area of 3.0 to 4.2V.

In addition, the electrode according to the prevent invention is different from an electrode disclosed in Japanese Patent Unexamined Publication No. 2001-160395, in which three types of components are simultaneously used by adding $Li_2CuO_2$ and $LiNiO_2$ with $LiMn_2O_4$ having the spinel structure. The reason for partially adding $LiNiO_2$ to $LiMn_2O_4$ is that the capacity of $LiMn_2O_4$ is greater than that of the cathode active material having the spinel structure. In addition, according to Japanese Patent Unexamined Publication No. 2001-160395, an amount of $Li_2CuO_2$ added to $LiMn_2O_4$ is about 5 to 50%, which corresponds to a case in which $Li_2CuO_2$ is used as a cathode active material. In contrast, according to the present invention, an amount of $Li_2CuO_2$ is about 0.5 to 10%, so that $Li_2CuO_2$ may serve as a cathode additive, which is a lithium ion source for providing lithium ions during the initial charge/ discharge operation.

The present invention uses the cathode obtained by adding $Li_2CuO_2$ to the cathode material, thereby preventing the over-discharge state of the lithium secondary battery. In particular, the present invention prevents the electric potential of the anode from rising to 3.4V or above.

Therefore, it is described a method for adjusting unbalance of the irreversible reaction between the cathode and the anode of the lithium secondary battery by adding $Li_2CuO_2$ to the cathode. In addition, it is described a method for preventing a lithium secondary battery from being over-discharged by adding $Li_2CuO_2$ to the cathode. In particular, it is described a method for preventing the electric potential of the anode from rising to 3.4V or above. At this time, an amount of $Li_2CuO_2$ is 0.5 to 10 weight % based on the total weight of cathode materials. Preferably, the amount of $Li_2CuO_2$ is 0.5 to 5 weight % based on the total weight of cathode materials.

According to the present invention, $Li_2CuO_2$ is added to the cathode active material as a cathode additive, so that lithium ions enough to compensate for the irreversible reaction at the anode are provided from $Li_2CuO_2$, thereby increasing the capacity of the battery, preventing the over-discharge of the battery, and restricting the abnormal increase in the electric potential of the anode even if the over-discharge occurs. Thus, it is possible to prevent copper ions from being dissociated from a copper collector, which is an anode collector. As a result, performance of the lithium secondary battery according to the present invention can be prevented from being degraded by the over-discharge. In addition, the capacity of the lithium secondary battery can be completely restored after the over-discharge.

According to the present invention, it is possible to provide an electrode for a lithium secondary battery, which can increase the capacity of the lithium secondary battery without degrading performance of the lithium secondary battery, can prevent the over-discharge of the lithium secondary battery, and can prevent degradation of the lithium secondary battery that can be caused by the over-discharge.

Hereinafter, the present invention will be described in more detail.

When comparing a cathode active material with an anode active material commonly used in practice, the cathode capacity is generally higher than the anode capacity and an initial charge/discharge efficiency of the cathode is also higher than that of the anode. Thus, some of lithium ions dissociated from the cathode are consumed at the anode in the process of forming a solid electrolyte interface (SEI). At this time, an amount of lithium ions consumed at the anode corresponds to a difference of the initial charge/discharge efficiency between the cathode and the anode, so that capacity loss corresponding to the above difference may occur. As a result, the irreversibleness is generated at the anode and the cathode.

According to the present invention, a predetermined amount of $Li_2CuO_2$ enough to compensate for the irreversible reaction at the cathode or capable of compensating for the lithium ions consumed at the anode in the process of forming the SEI is added to the cathode in such a manner that the cathode and the anode have the same efficiency, thereby increasing the capacity.

Meanwhile, in a case of a battery employing a cathode active material generally used in practice, such as $LiCoO_2$, $LiNiO_2$ and $Li(Ni_{1-x}Co_{1-y}Mn_{1-z})O_2$ (x+y+z= 1), the irreversible capacity of the anode is larger than that of the cathode, so the electric potential of the anode may rise before the electric potential of the cathode has been reduced during the over-discharge, thereby causing a Cu ion dissolution. Accordingly, performance of the battery may be degraded. However, if the irreversible capacity of the cathode is increased by adding a predetermined amount of $Li_2CuO_2$, which is an irreversible material having a great capacity, to the cathode, that is, if the efficiency of the cathode is dropped, the electric potential of the cathode is dropped before the electric potential of the anode rises during the over-discharge, so that the Cu ion dissolution may not occur. Accordingly, performance of the battery is not degraded even if the over-discharge has been generated. In addition, since $Li_2CuO_2$ added to the cathode can prevent the electric potential of the anode from being suddenly increased, the over-discharge of the battery can also be prevented.

The lithium secondary battery according to the present invention includes a cathode capable of intercalating/deintercalating lithium ions, an anode capable of intercalating/de-intercalating lithium ions, a porous separator, and an electrolyte. In detail, the lithium secondary battery includes a cathode having a lithium transition metal oxide, which is a cathode active material capable of intercalating/de-intercalating lithium ions, and $Li_2CuO_2$; the anode including graphite, a lithium metal or an alloy capable of intercalating/de-intercalating lithium ions; the porous separator; and the electrolyte including lithium salt and electrolyte compound.

$Li_2CuO_2$ releases lithium ions of at least 1mol during the first charge cycle, and then becomes a substantially irreversible material, which does not intercalate/de-intercalate lithium ions, in a voltage area of 3V or above. Therefore, if $Li_2CuO_2$ is added to the cathode, $Li_2CuO_2$ can provide lithium ions enough to compensate for the irreversible reaction at the anode, so that the great irreversible reaction occurring at the anode during the first cycle can be compensated.

An amount of $Li_2CuO_2$ is 0.5 to 5 weight % based on the total weight of cathode materials. If the amount of $Li_2CuO_2$ is less than 0.5 weight %, it may not sufficiently increase the irreversibleness at the cathode, so $Li_2CuO_2$ does not serve to prevent the over-discharge of the battery and the capacity is rarely increased. In contrast, if the amount of $Li_2CuO_2$ exceeds 10 weight %, a great amount of $Li_2CuO_2$ may remain after the first cycle without performing the electrochemical lithium ion intercalation/de-intercalation reaction, and as a result, a dead space is formed in the cathode corresponding to the amount of $Li_2CuO_2$, thereby reducing the capacity of the battery.

Lithium-containing transition metal oxide is used as a cathode active material. The cathode active material has a layered structure, the cathode active material includes at least one selected from the group consisting of $LiCoO_2$, $LiNiO_2$ and $Li(Ni_{1-x}Co_{1-y}Mn_{1-z})O_2$ (x+y+z= 1). More preferably, $LiCoO_2$ may be used as the cathode active material.

The cathode material used for forming the cathode may include a binder and a conductive agent in addition to the cathode active material and the cathode additive.

In addition, the lithium secondary battery according to the present invention includes an anode active material capable of intercalating/de-intercalating lithium ions, such as graphite, a lithium metal or an alloy. Preferably, synthetic graphite may be used as the anode active material. In this case, the anode can include a binding agent, preferably, PVDF or SBR.

A porous separator is preferably used as a separator interposed between the cathode and the anode. For instance, polyolefin-based porous separator may be used, but not limited thereto.

Preferably, the electrolyte includes a non-aqueous electrolyte. Such a non-aqueous electrolyte includes cyclic carbonate and linear carbonate as an electrolyte compound. The cyclic carbonate, for example, includes ethylene carbonate (EC), propylene carbonate (PC), or gamma-butyrolactone (GBL). The linear carbonate preferably includes at least one selected from the group consisting of diethyl carbonate (DEC), dimethyl carbonate (DMC), ethyl-methyl carbonate (EMC), and methyl-propyl carbonate (MPC). In addition, according to the present invention, the non-aqueous electrolyte includes lithium salt in addition to the above carbonate compound. Preferably, the lithium salt may be selected from the group consisting of $LiClO_4$, $LiCF_3SO_3$, $LiPF_6$, $LiBF_4$, $LiAsF_6$, and $LiN(CF_3SO_2)_2$.

The lithium secondary battery according to the present invention can be fabricated through performing a series of typical processes, in which the porous separator is interposed between the cathode and the anode and then the non-aqueous electrolyte is injected thereto.

An external appearance of the lithium secondary battery may be a can-type. The lithium secondary batteries are classified into cylinder-type, square-type and pouch-type lithium secondary batteries according to the shape of the can.

**Advantageous Effect**

According to the present invention, $Li_2CuO_2$ is added to the cathode of the lithium secondary battery as an electrode additive in such a manner that the electrode additive can provide lithium ions enough to compensate for the irreversible reaction at the anode, thereby increasing the total capacity of the lithium secondary battery. The electrode additive can prevent the electric potential of the anode from being excessively increased during the over-discharge so that the capacity of the lithium secondary battery can be completely restored after the over-discharge. That is, according to one embodiment of present invention, $Li_2CuO_2$ is added to the cathode of a lithium secondary battery employing graphite having the irreversible capacity of 30% or less as an anode active material, thereby increasing the capacity of the lithium secondary battery and completely restoring the capacity after the over-discharge.

**Description of the Drawings**

FIGS. 1a and 1b are graphs illustrating over-discharge test results between a lithium secondary battery of an Example according to the present invention and of a Comparative Example according to a conventional lithium secondary battery;

FIG. 2 is a graph illustrating a charge/discharge profile in a cathode and an anode obtained from a lithium secondary battery an Example according to the present invention and of a Comparative Example according to a conventional lithium secondary battery;

FIG. 3 is a graph illustrating the relationship between the amount of the $Li_2CuO_2$, which is a cathode additive, and the efficiency of the electrode; and

FIGS. 4a and 4b are graphs for explaining electrochemical characteristics of $Li_2CuO_2$; in which

FIG. 4a shows a voltage-current graph in a voltage area of 2.0 to 4.5V during the charge/discharge operations of $Li_2CuO_2$ where it can be understood that $Li_2CuO_2$ can be electrochemically utilized even in a voltage area of 3.0V or below (see, an oval region marked with a dotted line), and

FIG. 4b shows a voltage-current graph in a voltage area of 3.0 to 4.5V during the charge/discharge operations of $Li_2CuO_2$ where it can be understood that $Li_2CuO_2$ cannot be electrochemically utilized because the lithium ion intercalation/de-intercalation may not occur if the voltage is not dropped below 3.0V.

**Mode for Invention**

Hereinafter, the present invention will be described in more detail with reference to Examples and Comparative Examples thereof. These embodiments of the present invention are illustrative purposes only, and they do not intent to limit the scope of the present invention.

<Examples>

<Example 1>

An 18650-type cylindrical cell was fabricated through a typical process.

After weighing 4 parts by weight of $Li_2CuO_2$ based on 100 parts by weight of powdered $Li_2CoO_2$, they were mixed together through mechano-fusion. Then, after combining the mixture with a PVdF (polyvinylidene fluoride) binder, slurry was obtained by dispersing the mixture in an NMP (N-methyl pyrrolidone) solvent. Then, after coating the slurry on aluminum foil, heat was applied to the aluminum foil such that the NMP solvent can be evaporated from the slurry. Then, after pressing the slurry by applying pressure of about $500kg/cm^2$ to the slurry, the pressed-slurry was sliced so as to obtain a cathode. Synthetic graphite was coated on copper as an anode active material, thereby obtaining an anode. In addition, an electrolyte was prepared by mixing a solvent, which includes EC (ethylene carbonate) and EMC (ethyl-methyl carbonate) in a volume ratio of 1:2, then solving $LiPF_6$ with a concentration of 1M, and used for the fabrication of the 18650-type cylindrical cell.

<Example 2>

Example 2 was substantially identical to Example 1, except that LiNiO$_2$ was used as a cathode active material.

<Comparative Examples 1 and 2>

The lithium secondary battery was fabricated in the same manner as Example 1 and 2, except that the additive Li$_2$CuO$_2$ was not added to the cathode.

<Experimental Example>

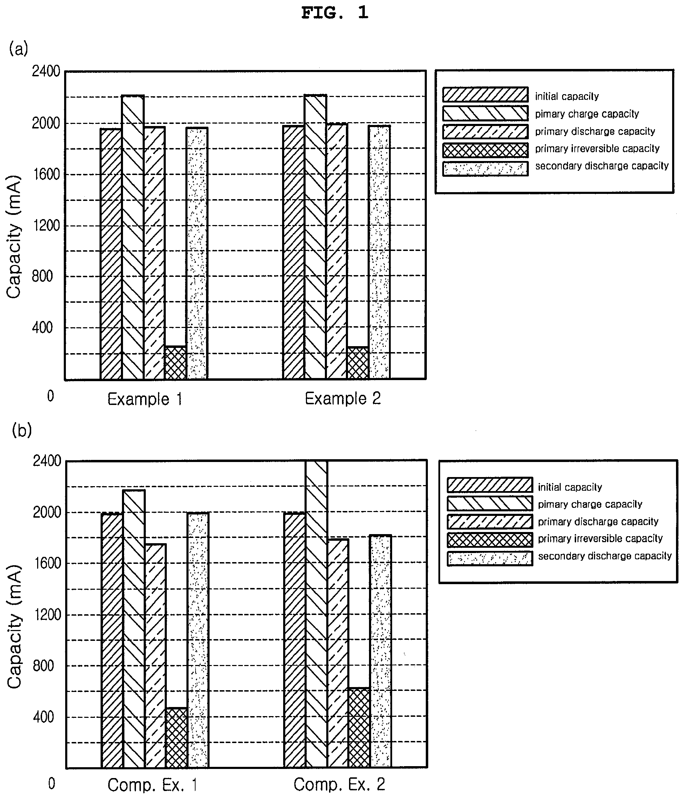

A typical charge-discharge test was performed with respect to the cylindrical cell fabricated through the Examples and Comparative Examples. The test results are shown in FIGS. 1 and 2.

Referring to Table 1 and FIG. 1 showing the charge-discharge test result, Examples 1 and 2 of the present invention represent the superior efficiency against over-discharge as compared with comparative examples 1 and 2, so the voltage of the anode can be prevented from rising.

Table 1

| | Before test | After test | | | |
|---|---|---|---|---|---|
| | Initial capacity | Primary charge capacity | Primary discharge capacity | Primary irreversible capacity | Secondary discharge capacity |
| Example 1 | 1981 mAh | 2210 mAh | 1965 mAh | 245 mAh | 1959 mAh |
| Example 2 | 1979 mAh | 2223 mAh | 1985 mAh | 238 mAh | 1983 mAh |
| Comparative Example 1 | 1980 mAh | 2181 mAh | 1725 mAh | 456 mAh | 1732 mAh |
| Comparative Example 2 | 1988 mAh | 2407 mAh | 1786 mAh | 621 mAh | 1809 mAh |

In the case of Comparative Examples, the lithium secondary battery was damaged during the over-discharge and great irreversible reaction occurred. Accordingly, the primary and secondary discharge capacities of the Comparative Examples are less than those of Examples of the present invention, and, the capacity may not reach the desired capacity, so the lithium secondary batterys according to the Comparative Examples are subject to spec-out. Although there is a difference in expectations for the recovery capacity of the lithium secondary battery depending on customers, in general, the lithium secondary battery must have the recovery capacity equal to or higher than 1900 mAh after the over-discharge test in order to satisfy the expectation of the customers. Referring to Table 1 and FIG. 1, Examples 1 and 2 of the present invention may satisfy the above condition.

In addition, FIG. 2 shows a charge/discharge profile in the cathode and the anode obtained from Example 1 and Comparative Example 1. As shown in FIG. 2, Example 1 represents the irreversible capacity larger than that of Comparative Example 1.

Meanwhile, the over-discharge test can be performed by continuously discharging the battery with 1mA current until the voltage of the battery reaches 0V.

Typically, the voltage area of the battery cell is 3.0 to 4.2V. In the case of a battery pack, the electrochemical reaction may occur in the battery cell in the voltage area of 2.75 to 4.35V depending on the circuit structure. In the case of a normal battery pack, a protective circuit is attached to the battery pack so as to prevent or shut off over-charge, over-voltage, and over-discharge. However, if the protective circuit malfunctions, the battery cell must have a function of preventing the over-discharge. A typical over-discharge test is performed by continuously discharging the battery with a low current until the voltage of the battery reaches 0V (electric potential of the cathode - electric potential of the anode). In this case, the lithium ions move from the cathode material to the anode. If the discharge operation is continuously performed at an exterior even after all lithium ions have been completely moved from the cathode to the anode, the electric potential of the anode may rise in order to allow the voltage of the battery cell to reach 0V.

**Industrial Applicability**

As described above, according to the present invention, $Li_2CuO_2$ is added to the cathode of the lithium secondary battery as an electrode additive in such a manner that the electrode additive can provide lithium ions enough to compensate for the irreversible reaction at the anode, thereby increasing the total capacity of the lithium secondary battery. The electrode additive can prevent the electric potential of the anode from being excessively increased during the over-discharge so that the capacity of the lithium secondary battery can be completely restored after the over-discharge.

**Claims**

1. A lithium secondary battery comprising:

   a cathode including lithium transition metal oxide capable of intercalating/de-intercalating lithium ions as a cathode active material, and $Li_2CuO_2$ as a cathode additive;
   an anode including graphite, a lithium metal or an alloy capable of intercalating/de-intercalating lithium ions;
   a separator; and
   an electrolyte including lithium salt and electrolyte compound
   wherein the cathode active material is a lithium transition metal compound having a layered structure selected from the group consisting of $LiCoO_2$, $LiNiO_2$ and $Li(Ni_{1-x}Co_{1-y}Mn_{1-z})O_2$ (x+y+z= 1), and
   wherein an amount of $Li_2CuO_2$ is 0.5 to 5 weight % based on a total weight of the cathode material,
   wherein an electric potential of the anode of the lithium secondary battery is prevented from rising to 3.4V or above.

2. The lithium secondary battery according to claim 1, wherein the lithium salt is at least one selected from the group consisting of $LiClO_4$, $LiCF_3SO_3$, $LiPF_6$, $LiBF_4$, $LiAsF_6$, and $LiN(CF_3SO_2)_2$.

3. The lithium secondary battery according to claim 1, wherein the electrolyte compound includes at least one selected from the group consisting of ethylene carbonate (EC), propylene carbonate (PC), gamma-butyrolactone (GBL), diethyl carbonate (DEC), dimethyl carbonate (DMC), ethyl-methyl carbonate (EMC), and methyl-propyl carbonate (MPC).

**Patentansprüche**

1. Lithiumsekundärbatterie, umfassend:

   eine Kathode, umfassend ein Lithium-Übergangsmetalloxid, welches dazu geeignet ist, Lithiumionen als ein Kathodenaktivmaterial zu interkalieren und zu deinterkalieren, und $Li_2CuO_2$ als ein Kathodenaddtitiv;
   eine Anode, umfassend Graphit, ein Lithiummetall oder eine Legierung, welche dazu geeignet ist, Lithiumionen zu interkalieren oder zu deinterkalieren;
   einen Separator; und
   einen Elektrolyten, umfassend ein Lithiumsalz und eine Elektrolytverbindung,
   wobei das Kathodenaktivmaterial eine Lithium-Übergangsmetallverbindung ist, welche eine geschichtete Struktur aufweist, welche aus der Gruppe bestehend aus $LiCoO_2$, $LiNiO_2$ und $Li(Ni_{1-x}Co_{1-y}Mn_{1-z})O_2$ (x+y+z= 1) ausgewählt ist, und
   wobei eine Menge von $Li_2CuO_2$ 0,5 bis 5 Gewichts-% basierend auf einem Gesamtgewicht des Kathodenmaterials beträgt,
   wobei ein elektrisches Potential der Anode der Lithiumsekundärbatterie an einem Ansteigen auf 3,4 V oder darüber gehindert wird.

2. Lithiumsekundärbatterie nach Anspruch 1, wobei das Lithiumsalz wenigstens eines ist, welches aus der Gruppe bestehend aus $LiClO_4$, $LiCF_3SO_3$, $LiPF_6$, $LiBF_4$, $LiAsF_6$ und $LiN(CF_3SO_2)_2$ ausgewählt ist.

3. Lithiumsekundärbatterie nach Anspruch 1, wobei die Elektrolytverbindung wenigstens eine umfasst, welche aus der Gruppe bestehend aus Ethylencarbonat (EC), Propylencarbonat (PC), gamma-Butyrolacton (GBL), Diethylcarbonat (DEC), Dimethylcarbonat (DMC), Ethylmethylcarbonat (EMC) und Methylpropylcarbonat (MPC) ausgewählt ist.

**Revendications**

1. Batterie secondaire au lithium comprenant :

   une cathode comportant un oxyde de métal de transition lithium capable d'intercaler/de désintercaler des ions lithium en tant que matériau actif de cathode, et du $Li_2CuO_2$ en tant qu'additif de cathode ;
   une anode comportant du graphite, un métal lithium ou un alliage capable d'intercaler/de désintercaler des ions lithium ;
   un séparateur ; et
   un électrolyte comportant un sel de lithium et un composé d'électrolyte dans laquelle le matériau actif de cathode est un composé de métal de transition lithium ayant une structure en couches choisie dans le groupe consistant en $LiCoO_2$, $LiNiO_2$ et $Li(Ni_{1-y}Co_{1-y}Mn_{1-z})O_2$ (x + y + z = 1), et
   dans laquelle une quantité de $Li_2CuO_2$ est de 0,5 à 5 % en poids par rapport à un poids total du matériau de cathode,
   dans laquelle on empêche un potentiel électrique de l'anode de la batterie secondaire au lithium de monter à 3,4 V ou plus.

2. Batterie secondaire au lithium selon la revendication 1, dans laquelle le sel de lithium est au moins un élément choisi dans le groupe consistant en $LiClO_4$, $LiCF_3SO_3$, $LiPF_6$, $LiBF_4$, $LiAsF_6$ et $LiN(CF_3SO_2)_2$.

3. Batterie secondaire au lithium selon la revendication 1, dans laquelle le composé d'électrolyte comporte au moins un élément choisi dans le groupe consistant en le carbonate d'éthylène (EC), le carbonate de propylène (PC), la gamma-butyrolactone (GBL), le carbonate de diéthyle (DEC), le carbonate de diméthyle (DMC), le carbonate d'éthyl-méthyle (EMC) et le carbonate de méthyl-propyle (MPC).

EP 1 864 344 B1

FIG. 1

(a)

(b)

## FIG. 2

## FIG. 3

## FIG. 4

(a)

Li$_2$CuO$_2$; CV (2.0V~4.5V)

(b)

Li$_2$CuO$_2$; CV (3.0V~4.6V)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5744265 A
- JP 4022066 A
- US 5679481 A
- JP 6111821 A
- JP 2001160395 A